(19) **Europäisches Patentamt / European Patent Office / Office européen des brevets**

(11) **EP 3 320 219 B1**

(12) **FASCICULE DE BREVET EUROPEEN**

(45) Date de publication et mention de la délivrance du brevet:
**11.09.2019 Bulletin 2019/37**

(21) Numéro de dépôt: **16757275.9**

(22) Date de dépôt: **08.07.2016**

(51) Int Cl.:
**F16B 31/02** *(2006.01)*      **G01L 5/24** *(2006.01)*

(86) Numéro de dépôt international:
**PCT/FR2016/051749**

(87) Numéro de publication internationale:
**WO 2017/006068 (12.01.2017 Gazette 2017/02)**

(54) **VIS MUNIE DE JAUGES D'EXTENSOMETRIE POUR MESURER LA CONTRAINTE DE TRACTION ET/OU DE CISAILLEMENT SUBIE(S) PAR LA VIS**

SCHRAUBE MIT EXTENSOMETRISCHEN DEHNUNGSMESSERN ZUM MESSEN DER ZUG- UND/ODER SCHERDEHNUNG DER SCHRAUBE

SCREW INSTRUMENTED WITH EXTENSOMETRIC STRAIN GAUGES TO MEASURE THE TENSILE AND/OR SHEAR STRAIN EXPERIENCED BY THE SCREW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2015 FR 1556518**

(43) Date de publication de la demande:
**16.05.2018 Bulletin 2018/20**

(73) Titulaires:
• **Texys.FR**
**58640 Varennes-vauzelles (FR)**
• **Demeocq, Etienne**
**58200 Alligny-Cosne (FR)**

(72) Inventeur: **DEMEOCQ, Etienne**
**58200 Alligny-Cosne (FR)**

(74) Mandataire: **Cabinet Chaillot**
**16/20, avenue de l'Agent Sarre**
**B.P. 74**
**92703 Colombes Cedex (FR)**

(56) Documents cités:
**WO-A1-2015/075823      DE-A1- 4 410 722**
**US-A- 3 201 977      US-A1- 2014 251 027**

## Description

La présente invention concerne le domaine du serrage des vis et porte, en particulier, sur une vis ayant des moyens permettant de connaître les contraintes présentes dans celle-ci pendant et/ou après le serrage.

Lors de l'opération de serrage d'une vis, il peut être nécessaire de connaître avec précision les efforts présents dans la vis. Cela est également utile dans la maintenance des assemblages réalisés à l'aide de vis, puisque l'on souhaite s'assurer que le serrage reste adéquat au cours du temps.

En effet, un serrage trop intense peut détériorer la vis ou la pièce dans laquelle elle est vissée, et un serrage trop faible peut conduire à la désolidarisation de la vis par rapport à ladite pièce. Le serrage se traduit par l'application d'une force de traction sur la vis, dans la direction longitudinale de cette dernière, qui se traduit ainsi en des contraintes de traction internes à la vis et en un allongement de celle-ci.

En outre, la vis peut être soumise à un cisaillement par les pièces auxquelles elle est vissée, par exemple du fait d'un mauvais alignement des trous dans lesquelles est vissée la vis ou tout simplement des sollicitations que subissent en fonctionnement lesdites pièces. Ce cisaillement créera des contraintes de cisaillement internes à la vis, lesquelles peuvent conduire à un desserrage ou, dans le pire des cas, à une rupture de la vis.

Les dispositifs classiques de mesure du couple de serrage, à savoir les outils de serrage comprenant un dynamomètre, permettent de serrer une vis avec un couple appliqué à la vis connu de manière précise. Cependant, le couple appliqué à la vis ne correspond pas obligatoirement au serrage réalisé, notamment en raison du fait que ce dernier dépend de la friction, des matériaux, etc. Ces dispositifs ne permettent donc pas de garantir le serrage.

Ainsi, pour garantir le serrage, on cherchera à mesurer les contraintes internes de traction dans la vis, plutôt que le couple de serrage. En effet, le serrage de deux pièces l'une contre l'autre correspond directement à l'effort de traction appliqué à la vis, et donc à l'allongement de cette dernière.

On connaît l'utilisation de dispositifs de mesure des contraintes intégrés dans la vis. Ils permettent notamment d'obtenir une valeur de l'allongement de la vis à l'aide de techniques particulières, telles que les techniques par ultrasons ou par barreau témoin.

Cependant, ces techniques présentent un ou plusieurs parmi les inconvénients suivants :

- les équipements mis en oeuvre sont complexes,
- la vis est creusée jusque dans la partie filetée dans le cas du barreau témoin, ce qui induit une fragilisation,
- la mesure est fonction de la longueur de la vis et les efforts sont à calculer en fonction de chaque type de vis, et
- la technique n'est adaptable qu'à des vis de relativement grande taille et ne permet de mesurer qu'un effort de traction.

Afin de résoudre ces problèmes, le brevet taïwanais TW 1310810 propose une vis 100, représentée sur la Figure 1, formée d'un corps cylindrique 101 fileté et d'une tête 102, ayant une jauge d'extensométrie 103 sur la paroi latérale 104 de ladite tête, la jauge 103 étant reliée par un câble 105 à des moyens de traitement et d'affichage 106 disposés sur la face supérieure 107 de la tête de vis 102.

L'utilisateur final peut ainsi périodiquement contrôler que l'effort de serrage reste adéquat au cours du temps.

Avec une telle vis 100, la jauge 103 peut être endommagée par le moyen de serrage lors du serrage, tel qu'une clé. En outre, il est nécessaire de creuser un trou dans la vis pour faire passer le câble 105, et les déformations détectées sont de faible intensité, et donc difficiles à évaluer avec précision.

Afin de résoudre ces problèmes, la demande de brevet américain US 2014251027 divulgue une vis 200, représentée sur la Figure 2, formée d'un corps cylindrique 201 fileté et d'une tête 202, comprenant au moins une jauge d'extensométrie 203 disposée dans une gorge annulaire 204 formée sur la face inférieure 205 de la tête de vis 202 et de manière adjacente au corps cylindrique 201.

La ou les jauges 203 peuvent transmettre leurs valeurs mesurées à un dispositif d'affichage externe à la vis, soit de manière filaire par un câble passant par un trou percé dans la tête de vis 202, soit de manière sans fil, auquel cas chaque jauge 203 intègre une électronique avec transmission sans fil.

Cependant, cette vis présente plusieurs inconvénients :

- une communication sans fil entre les jauges et le dispositif d'affichage externe est difficile étant donné que les jauges sont prisonnières entre la vis et les pièces auxquelles elle est vissée, qui sont généralement métalliques et qui empêchent donc les transmissions ;
- les jauges ne sont que faiblement déformées pendant le serrage et il est donc nécessaire d'avoir une forte déformation de la tête pour obtenir un signal mesurable ;
- les jauges sont placées sous la tête, dans la zone de celle-ci où la pression de serrage est exercée, et peuvent donc être facilement détériorées ;
- les jauges sont rendues inaccessibles une fois le serrage effectué ; et
- des contraintes parasites pour la détermination de l'effort de serrage, telles que le cisaillement, peuvent participer à la déformation des jauges, de sorte que l'on ne mesure pas correctement l'effort de serrage réellement appliqué, lequel correspond à une déformation des jauges due uniquement à la contrainte de traction dans la vis le long de sa direction longitudinale.

La présente invention vise à résoudre les problèmes rencontrés avec les vis à jauges de mesure décrites ci-dessus, et ainsi proposer une vis dont la mesure des contraintes internes est plus aisée et plus fiable pour un meilleur contrôle dans le temps du serrage assuré par la vis et dont les jauges sont moins susceptibles d'être détériorées.

La présente invention a pour objet une vis ayant une tête de vis et un corps cylindrique fileté, la tête de vis étant munie de jauges d'extensométrie disposées de façon à se déformer avec la déformation de la tête de vis, afin de mesurer une contrainte interne à la vis, lesdites jauges étant à cet effet reliées ou aptes à être reliées à une alimentation électrique et à des moyens de détermination pour déterminer la valeur d'au moins une contrainte interne à la vis à partir des déformations desdites jauges, caractérisée par le fait que la tête de vis présente, sur sa face supérieure, un trou conique dont l'axe de révolution est aligné avec l'axe de révolution du corps cylindrique de la vis, et que lesdites jauges sont disposées sur la paroi du trou conique de façon à se déformer avec la déformation du trou conique, lesdites jauges étant orientées de façon à mesurer au moins un type de contrainte interne à la vis choisi parmi la traction et le cisaillement afin de connaître les efforts présents dans le corps cylindrique.

La solution selon la présente invention permet une amplification de la déformation des jauges d'extensométrie lorsque la vis est sous contrainte, pour rendre plus fiable les mesures des contraintes de traction et/ou de cisaillement, sans mesures parasites, les jauges étant par ailleurs protégées de la détérioration.

Selon un premier mode de réalisation particulier, la tête de vis est munie de quatre jauges d'extensométrie, dites pour traction, deux jauges sont disposées chacune avec leur direction principale de mesure alignée avec une génératrice dudit trou conique, les deux génératrices étant diamétralement opposées, et les deux autres jauges sont disposées chacune avec leur direction principale de mesure sur un cercle formé à l'intersection de la paroi dudit trou conique et d'un plan imaginaire parallèle à la face supérieure de la tête de vis, et sont réparties à équidistance les unes des autres sur la circonférence dudit cercle, en étant de préférence chacune centrée sur l'une respective desdites deux génératrices, les quatre jauges étant reliées par un pont de Wheatstone relié ou apte à être relié à l'alimentation électrique et aux moyens de détermination, lesdites jauges permettant la mesure de la contrainte interne de traction lorsqu'un cisaillement n'est pas appliqué dans la tête de vis.

Selon un deuxième mode de réalisation, la tête de vis est munie de quatre premières jauges d'extensométrie, dites pour traction, et de quatre secondes jauges d'extensométrie, également dites pour traction, lesdites premières jauges sont disposées chacune avec leur direction principale de mesure alignée avec une génératrice dudit trou conique et sont réparties selon un angle uniforme entre elles, et lesdites secondes jauges sont disposées chacune avec leur direction principale de mesure sur un cercle formé à l'intersection de la paroi dudit trou conique et d'un plan imaginaire parallèle à la face supérieure de la tête de vis, et sont réparties à équidistance les unes des autres sur la circonférence dudit cercle, lesdites premières jauges formant deux groupes de jauges comprenant chacun deux premières jauges adjacentes reliées électriquement en série et lesdites secondes jauges formant deux autres groupes de jauges comprenant chacun deux secondes jauges adjacentes reliées électriquement en série, les quatre groupes de jauges étant reliés par un pont de Wheatstone relié ou apte à être relié à l'alimentation électrique et aux moyens de détermination, lesdites premières et secondes jauges permettant la mesure de la contrainte interne de traction dans la tête de vis afin de connaître les efforts présents dans le corps cylindrique.

De préférence, la tête de vis est une tête hexagonale et la direction principale de mesure de chacune desdites premières jauges forme un angle compris entre 30 et 10 degrés, de préférence de 15 degrés, par rapport à une génératrice reliant le sommet du trou conique à un point d'intersection du cercle générateur du trou conique avec un segment de droite reliant deux sommets opposés de l'hexagone définissant le contour de la face supérieure de la tête de vis.

Chaque seconde jauge peut être située entre les directions principales de mesure de deux premières jauges adjacentes.

De préférence, chaque seconde jauge est centrée sur la direction principale de mesure de l'une, correspondante, desdites premières jauges. On entend par « centrée » que la direction principale de mesure de la première jauge passe par le centre de la seconde jauge, pris dans la direction principale de mesure de cette dernière.

De façon encore davantage préférée, chaque seconde jauge est d'un seul tenant avec la première jauge correspondante, sous la forme d'une rosette à jauge double.

Selon un troisième mode de réalisation particulier, la tête de vis est munie de quatre jauges d'extensométrie, dites pour cisaillement, les première et troisième jauges étant disposées chacune parallèlement à deux génératrices situées à 45° de part et d'autre d'une génératrice principale du trou conique, les deux autres jauges étant disposées chacune parallèlement à deux génératrices situées à 45° de part et d'autre d'une autre génératrice principale du trou conique diamétralement opposée à ladite génératrice principale du trou conique, les quatre jauges étant reliées par un pont de Wheatstone relié ou apte à être relié à l'alimentation électrique et aux moyens de détermination, lesdites jauges permettant la mesure de la contrainte interne de cisaillement dans la tête de vis afin de connaître les efforts présents dans le corps cylindrique.

De préférence, le trou conique a une hauteur inférieure ou égale à celle de la tête de vis.

De préférence, l'angle du sommet du cône est compris entre 70 et 150 degrés, de préférence entre 75 et 120 degrés, et, de la façon que l'on préfère le plus, est de 90 degrés.

Les quatre jauges pour cisaillement peuvent être disposées conjointement avec les jauges pour traction, ou être disposées sans les jauges pour traction.

De préférence, une gorge est formée sur la surface inférieure de la tête de la vis et de manière concentrique et adjacente au corps cylindrique fileté.

Les jauges d'extensométrie peuvent être reliées ou aptes à être reliées à l'alimentation électrique et aux moyens de détermination par liaison filaire.

Les jauges d'extensométrie peuvent être reliées ou aptes à être reliées à l'alimentation électrique et aux moyens de détermination de manière sans fil, les jauges étant reliées à un premier émetteur/récepteur sans fil de type communication en champ proche (NFC), et l'alimentation électrique et les moyens de détermination étant reliés à un second émetteur/récepteur sans fil de type NFC, les premier et second émetteurs/récepteurs étant aptes à transférer entre eux de l'énergie et des informations de manière sans fil.

Pour mieux illustrer l'objet de la présente invention, on va en décrire ci-après, à titre indicatif et non limitatif, plusieurs modes de réalisation particuliers avec référence au dessin annexé.

Sur ce dessin :

- les Figures 1 et 2 sont des vues, respectivement perspective et en coupe verticale, de vis à jauges de mesure de contraintes selon l'état antérieur de la technique ;

- la Figure 3a est une vue schématique d'une vis selon la présente invention, reliant deux pièces, et reliée par câble à une alimentation électrique et aux moyens de détermination ;

- la Figure 3b est une vue schématique d'une vis selon la présente invention, reliée de manière sans fil à une alimentation électrique et aux moyens de détermination ;

- la Figure 4 est un schéma de principe, en coupe verticale, d'une vis selon la présente invention ;

- la Figure 5 est un schéma de principe d'agencement des jauges, en vue de dessus, de la vis selon le premier mode de réalisation ;

- la Figure 6 est un schéma électrique du pont de Wheatstone reliant les jauges de la vis selon l'invention ;

- la Figure 7 est un schéma de principe, en coupe verticale, d'une vis selon le premier mode de réalisation de la présente invention, subissant une contrainte de traction due à l'application d'un couple de serrage ;

- la Figure 8 représente une courbe d'étalonnage d'une vis selon le premier mode de réalisation ;

- la Figure 9 est un schéma de principe d'agencement des jauges, en vue de dessus, d'une vis selon un deuxième mode de réalisation de la présente invention ;

- la Figure 10 est une vue schématique de dessus d'une vis selon le deuxième mode de réalisation, avec le câblage des jauges, les jauges étant représentées à l'horizontale pour des raisons de commodité de représentation ;

- la Figure 11 est un schéma de principe, en vue de côté et en coupe partielle, d'une vis selon un troisième mode de réalisation de la présente invention, munie de jauges d'extensométrie pour mesurer le cisaillement ;

- la Figure 12 est un schéma de principe, en vue de dessus, de la vis selon le troisième mode de réalisation ; et

- la Figure 13 est un schéma de principe, en vue de côté et en coupe partielle, de la vis selon le troisième mode de réalisation, subissant une contrainte de cisaillement.

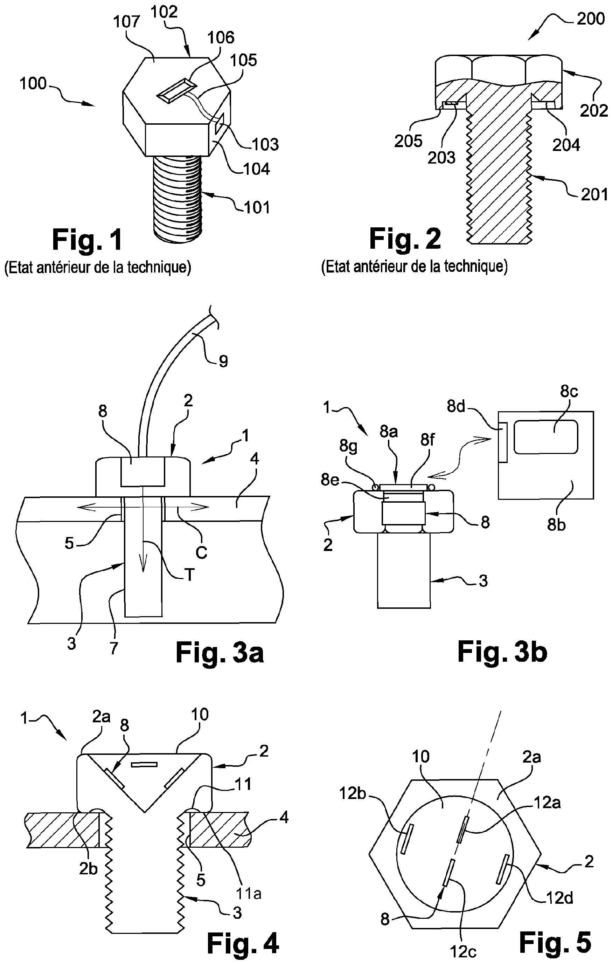

Si l'on se réfère tout d'abord à la Figure 3a, on peut voir que l'on y a représenté une vue de principe d'une vis 1 selon la présente invention, qui a une tête 2 et un corps cylindrique fileté 3 et qui relie une première pièce 4 ayant un trou traversant 5 et une seconde pièce 6 ayant un trou borgne taraudé 7 dont le taraudage correspond au filetage du corps fileté 3.

La vis 1 peut subir une contrainte de traction selon la flèche T, une contrainte de cisaillement selon la flèche à double sens C, ou les deux contraintes conjointes.

La vis 1 comprend un ensemble à jauges d'extensométrie 8 relié à une alimentation électrique et à des moyens de détermination de contrainte(s) interne(s) (non représentés).

Les moyens de détermination de contrainte(s) interne(s) sont ici un voltmètre permettant de mesurer la tension aux bornes d'un pont de Wheatstone, pont qui sera décrit plus en détail dans la suite de la description.

L'ensemble à jauges 8 peut être relié à ladite alimentation électrique et auxdits moyens de détermination, soit par une liaison filaire 9, comme représenté sur la Figure 3a, soit par une liaison sans fil comme représenté sur la Figure 3b. Dans ce dernier cas, l'ensemble à jauges 8 est relié à un premier émetteur/récepteur sans fil 8a de type NFC (communication en champ proche), et l'alimentation électrique 8b et les moyens de détermination 8c sont reliés à un second émetteur/récepteur sans fil 8d de type NFC, les premier et second émetteurs/récepteurs 8a, 8d étant aptes à transférer entre eux de l'énergie et des informations de manière sans fil.

Plus précisément, le premier émetteur/récepteur sans fil 8a est formé d'un amplificateur 8e, d'une puce NFC 8f et d'une antenne circulaire 8g entourant l'amplificateur 8e, ces éléments étant intégrés dans l'ensemble à jauges 8, et formant la partie supérieure de ce dernier. Le second émetteur/récepteur sans fil 8b comprend des éléments similaires (non représentés).

L'avantage d'une telle communication sans fil est de permettre, au cours de la vie en service de la vis 1, de placer à n'importe quel moment le second émetteur/récepteur 8b près de la vis 1 pour lire la valeur de contrainte de la vis 1, afin de vérifier ainsi que cette dernière est bien serrée, et procéder à un resserrage dans le cas contraire.

Si l'on se réfère à la Figure 4, on peut voir que l'ensemble à jauges 8 comprend des jauges d'extensométrie qui sont installées dans un trou conique 10 réalisé sur la face supérieure 2a de la tête 2 et dont l'axe de révolution est aligné avec celui du corps cylindrique 3, de telle sorte que le trou 10 est réalisé au centre de la tête 2.

Les jauges sont fixées dans le trou conique 10 par un collage. Le collage doit être réalisé de manière précise, pour que la déformation de la jauge reflète la déformation de la pièce de la manière la plus proche possible.

La hauteur du trou conique 10 est ici sensiblement égale à celle de la tête de vis 2, mais elle peut être inférieure. L'angle au sommet du trou conique 10 est ici de 90 degrés. On souligne ici que cette dimension du trou conique 10 n'est pas limitative et est donnée uniquement à titre d'exemple, ainsi que les Figures annexées sont des vues schématiques non limitatives.

Le trou conique 10 permet d'amplifier les déformations subies par les jauges lorsque la tête de vis 2 subit une contrainte.

En effet, dans l'état antérieur de la technique, les jauges sont disposées sur une face latérale de la tête de vis, ou dans une gorge formée sur sa face inférieure.

Dans le cas d'une traction, une jauge disposée sur une face latérale de la tête de vis ne subit qu'un très faible raccourcissement, puisque le bas de ladite face prend appui sur le support sur lequel la vis est serrée, la tête s'écrasant très faiblement à cet endroit, et une jauge disposée dans la gorge subit une faible déformation même en présence d'une contrainte d'intensité élevée, cette partie de la vis subissant peu de déformations à cet endroit.

Des jauges placées dans le trou conique 10 seront davantage déformées que les jauges des vis de l'état antérieur de la technique, car le fond du trou conique 10 sera tiré vers le bas dans le cas d'une traction orientée vers le bas, et par conséquent la génératrice du trou conique 10 va s'allonger de manière plus importante qu'une face latérale de la tête de vis ou que la gorge.

De plus, la disposition des jauges dans le trou conique 10 permet, si nécessaire, de contrôler ces dernières de manière aisée et rapide, ce qui n'est pas réalisable avec les vis de l'état antérieur de la technique.

En outre, le placement des jauges dans le trou conique 10 permet de protéger ces dernières. En effet, contrairement à l'état antérieur de la technique, les jauges ne peuvent pas être endommagées ni par un outil, ni par un serrage trop important.

Le premier émetteur/récepteur, lorsqu'il est présent, pourra être fixé à la paroi du trou conique 10, par exemple par collage des bords de la puce NFC contre ladite paroi, ou autrement pourra être collé sur la face supérieure 2a de la tête 2, en recouvrant le trou conique 10, dans le cas de vis de plus petite taille.

Une gorge 11 est réalisée sur la face inférieure 2b de la tête 2 et est adjacente au corps cylindrique fileté 3.

La gorge 11 permet d'assurer que l'appui de la tête de vis 2 ne se fasse pas trop près du corps cylindrique fileté 3 et que la déformation de la tête de vis 2 ne dépende pas de son installation. En effet, le trou 5 du support 4 dans lequel passe la vis est généralement légèrement plus large que la vis, afin de faciliter le passage de celle-ci. Il existe donc un jeu entre la vis et ledit trou, et la vis peut être positionnée de manière décalée dans ledit trou, de telle sorte que le jeu n'est pas le même sur toute la circonférence du trou. La surface d'appui de la tête de vis dépend dudit jeu, et si la surface d'appui diminue, les contraintes seront plus importantes, et la déformation plus grande.

On voit donc que la déformation dépend de la surface de la tête de vis 2 en appui sur le support 4.

La gorge 11 permet d'assurer qu'une même surface d'appui 11a sera en appui sur le support 4, quelle que soit la position de la vis 1 dans le trou 5.

Sur la Figure 4, la vis 1 est centrée, et on comprend que si celle-ci est décalée à gauche ou à droite, on aura toujours la même surface d'appui 11a. Par conséquent, les déformations des jauges ne dépendent pas de la position de la vis 1 par rapport au trou 5.

**Premier mode de réalisation**

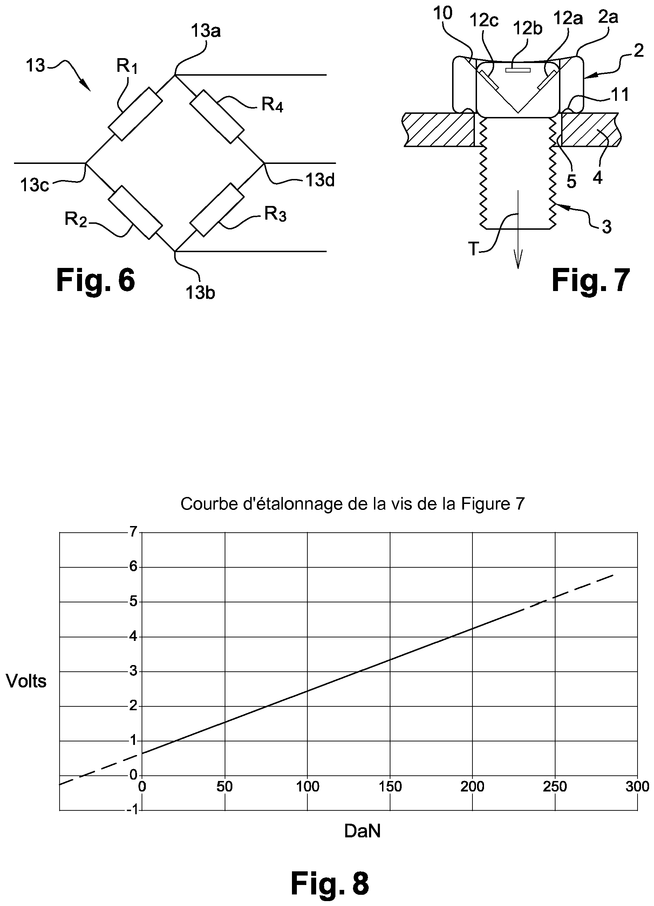

Si l'on se réfère aux Figures 5 et 6, on peut voir que des jauges d'extensométrie, en particulier quatre jauges d'extensométrie 12a-12d, sont fixées dans le trou conique 10.

Chacune des jauges 12a-12d a une direction principale de mesure, représentée par l'orientation du segment schématisé formant chacune des jauges 12a-12d sur les Figures 4 et 5. La direction principale de mesure d'une jauge est ici la direction longitudinale de la jauge, suivant laquelle la jauge s'allonge ou se raccourcit.

Deux premières jauges 12a, 12c sont disposées chacune avec leur direction principale de mesure alignée avec une génératrice dudit trou conique 10, lesdites génératrices étant diamétralement opposées.

Deux secondes jauges 12b-12d sont disposées chacune avec leur direction principale de mesure sur un cercle formé à l'intersection de la paroi dudit trou conique 10 et d'un plan imaginaire parallèle à la face supérieure 2a de la tête de vis 2, et sont diamétralement opposées.

Les quatre jauges 12a-12d, et plus généralement les jauges de l'ensemble à jauges 8, sont reliées électriquement selon un pont de Wheatstone 13 alimenté électriquement par l'alimentation électrique en deux points 13a et 13b, le pont de Wheatstone 13 étant en outre relié aux moyens de détermination de contrainte(s) interne(s), ici un voltmètre, en deux points 13c et 13d.

Afin de simplifier la lecture, on utilise les termes R1-R4 pour définir la valeur de la résistance des jauges 12a-12d. On a ainsi le groupe d'équations (1) suivant :

$$R1 = R(12a); \qquad R2 = R(12b);$$

$$R3 = R(12c); \text{ et } \qquad R4 = R(12d).$$

L'équation (2) relie les valeurs de résistance R1-R4 avec les tensions d'entrée et de sortie respectivement Ve (tension appliquée entre 13a et 13b) et Vs (tension mesurée entre 13c et 13d), du pont de Wheatstone pont 13 :

$$(2) \quad Vs = [Ve.(R1.R3-R2.R4)]/[(R2+R1).(R3+R4)]$$

A l'état initial, c'est-à-dire lorsqu'aucune contrainte n'est appliquée sur la vis 1, les jauges 12a-12d ont la même valeur de résistance.

Ainsi, de manière générale et pour la suite de la description, on considérera que chacune des jauges a une même valeur de résistance R à l'état initial.

Dans le cas présent, R1 = R2 = R3 = R4 = R.

En remplaçant dans l'équation (2), on obtient :

$$Vs = [Ve.(R^2 - R^2)]/[(2R).(2R)].$$

On comprend donc que, comme $R^2-R^2 = 0$, on a Vs = 0 quelle que soit Ve. Le pont est alors dit équilibré, dans cet état initial.

Inversement, on comprend que le pont est équilibré lorsque l'équation (3) est satisfaite :

$$(3) \quad R1.R3 - R2.R4 = 0$$

On va maintenant étudier le comportement des jauges et les mesures associées pour différents cas de contrainte de traction.

Cas de la traction seule

Si l'on se réfère à la Figure 7, on peut voir que lorsqu'une force de traction T est exercée sur la vis 1, en

6

particulier pendant son serrage, la tête de vis 2 se déforme d'une manière telle que sa surface supérieure 2a devient concave. Dans un tel cas, les premières jauges 12a, 12c s'allongent alors que les secondes jauges 12b, 12d raccourcissent.

La valeur de résistance d'une jauge d'extensométrie est proportionnelle à sa longueur, et augmente lorsque la jauge s'allonge et diminue lorsque la jauge se rétrécit.

Ainsi, la valeur de résistance des premières jauges 12a, 12c augmente d'une valeur donnée, par exemple A, et la valeur de résistance des secondes jauges 12b, 12d diminue d'une valeur donnée, par exemple -B.

En remplaçant dans le groupe d'équations (1), on a donc : R1 = R3 = R + A, et R2 = R4 = R - B.

Puis en remplaçant dans l'équation (3), on a :

$$\text{R1.R3 - R2.R4 = (R+A)}^2 \text{ - (R-B)}^2$$
$$= \text{A}^2\text{-B}^2\text{+2RA+2RB} \neq 0.$$

Même dans le cas où les premières jauges s'allongent autant que les secondes jauges raccourcissent, c'est-à-dire avec A=B, et en remplaçant B par A dans (3), on a encore (3) = 4RA ≠ 0.

L'équation (3) n'est pas satisfaite, et une tension Vs non nulle est mesurée.

On a vérifié expérimentalement que la contrainte de traction est liée à la tension Vs par une relation mathématique linéaire. En d'autres termes, la contrainte de traction est proportionnelle à la tension électrique mesurée.

Un exemple de droite d'étalonnage tension/contrainte est représenté sur la Figure 8. Pour la réaliser, on applique différentes forces de traction connues sur la vis 1 et on mesure pour chacune la tension au pont de Wheatstone 13. Ainsi, on peut connaître la force de traction en connaissant la tension mesurée au pont 13.

Il est nécessaire d'établir une telle droite d'étalonnage pour chaque type de vis car le coefficient de proportionnalité, à savoir la pente de la droite, est différent pour chaque vis. Il dépend en effet, et entre autres, de la forme précise de la vis 1, de sa longueur, de la taille de la tête de vis 2, et de la position exacte des jauges.

Ainsi, en pratique, seront fournies à l'utilisateur final la vis et la droite d'étalonnage correspondante, de sorte que l'utilisateur peut connaître la valeur de la contrainte de traction à partir de la valeur de tension fournie par les moyens de détermination de contrainte(s) interne(s).

Cas du cisaillement seul

Lors de l'application d'une force de cisaillement seule sur la vis 1, la tête de vis 2 raccourcit dans la direction de cisaillement et s'allonge dans la direction orthogonale au cisaillement. Dans un tel cas, les premières jauges 12a, 12c ne sont que très faiblement déformées et les secondes jauges 12b, 12d s'allongent ou se raccourcissent en fonction de la direction du cisaillement.

En particulier, lorsqu'un cisaillement orienté selon un axe passant par les jauges 12a et 12c est appliqué, les jauges 12b et 12d raccourcissent.

Ainsi, la valeur de résistance des jauges 12a, 12c n'est pas modifiée, ou le sera de manière négligeable, et la valeur de résistance des secondes jauges 12b, 12d diminue d'une même valeur -C.

On a donc R2 = R4 = R-C ; et R1 = R3 = R.

En remplaçant dans l'équation (3), on a :

$$\text{(3)} = \text{R}^2 \text{ - (R-C)}^2$$
$$= \text{R}^2\text{-R}^2\text{-C}^2\text{+2RC}$$
$$= \text{-C}^2\text{+2RC} \neq 0.$$

L'équation (3) n'est pas satisfaite, et une tension Vs non nulle est mesurée, ce par quoi le cisaillement est mesuré.

De la même manière, un cisaillement orienté dans la même direction que les jauges 12b et 12c fera s'allonger celles-ci.

On aura donc R2 = R4 = R+C et (3) = C²-2RC ≠ 0. On obtient donc une valeur de tension qui traduit la contrainte de cisaillement subie par la vis. Cependant, cette mesure est une mesure parasite, et n'est pas le but recherché par la vis selon le premier mode de réalisation de la présente invention.

Cas d'une traction et d'un cisaillement simultanés

Dans le cas de l'application d'une traction conjointement à un cisaillement, par exemple un cisaillement selon un axe passant par les jauges 12a et 12c est appliqué, on observe le comportement suivant des jauges :

- les jauges 12a et 12c s'allongent sous l'effet de la traction, le cisaillement ne produisant qu'une très faible déformation, donc négligeable, de celles-ci, et
- les jauges 12b et 12d raccourcissent sous l'effet de la traction et raccourcissent davantage sous l'effet du cisaillement.

On a donc :

$$R1 \; = \; R3 \; = \; R+A,$$

et

$$R2 \; = \; R4 \; = \; R-B-C.$$

En reprenant l'équation (3), on obtient :

$$(3) \quad = \; (R+A)^2 \; - \; (R-B-C)^2$$
$$= \; R^2+A^2+2RA \; - \; R^2-B^2-C^2+2RB+2RC-2BC$$

Même dans le cas où les premières jauges s'allongent autant que les secondes jauges raccourcissent sous l'effet de la traction, c'est-à-dire avec A=B, et en remplaçant B par A dans (3), on a encore (3) = 4RA+-C²+2RC-2AC ≠ 0.

On constate que l'on mesure donc une valeur de résistance dans lesquelles les composantes dues à la traction et au cisaillement se mélangent.

Ainsi, la vis selon le premier mode de réalisation permet de mesurer de manière précise une contrainte de traction, sous la condition qu'aucun cisaillement n'est présent.

En pratique, les deux contraintes peuvent être exercées, et les deuxième et troisième modes de réalisation permettent de mesurer respectivement une contrainte de traction et une contrainte de cisaillement, même dans le cas où ces deux contraintes sont exercées simultanément.

**Deuxième mode de réalisation**

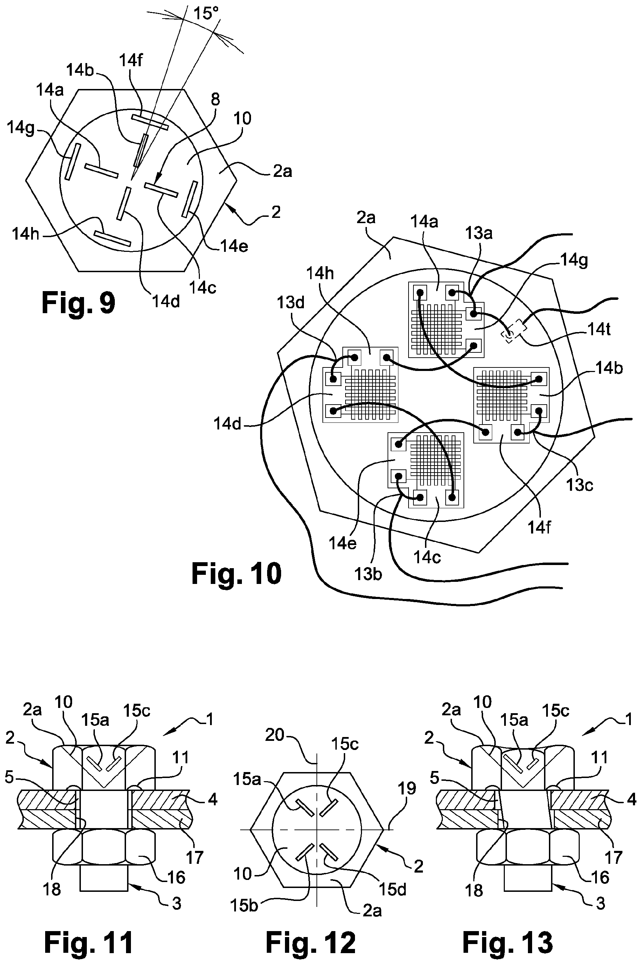

Si l'on se réfère maintenant aux Figures 9 et 10, on peut voir que la tête de vis 2 selon le deuxième mode de réalisation de la présente invention a huit jauges d'extensométrie 14a-14h fixées dans le trou conique 10. Chacune des jauges 14a-14h a une direction principale de mesure, représentée par l'orientation du segment schématisé formant chacune des jauges 14a-14h sur la Figures 9.

Quatre premières jauges 14a-14d sont disposées chacune avec leur direction principale de mesure alignée avec une génératrice dudit trou conique 10 et sont réparties selon un angle uniforme entre elles. En d'autres termes, la direction de mesure de l'une des jauges 14a-14d est à angle droit de celle des deux jauges 14a-14d qui lui sont adjacentes, lorsque la vis 1 est vue de dessus, comme sur la Figure 9.

Quatre secondes jauges 14e-14h sont disposées chacune avec leur direction principale de mesure sur un cercle formé à l'intersection de la paroi dudit trou conique 10 et d'un plan imaginaire parallèle à la face supérieure 2a de la tête de vis 2, et sont réparties à équidistance les unes des autres sur la circonférence dudit cercle. En d'autres termes, les jauges 14e-14h sont opposées deux à deux et l'une des jauges 14e-14h est à un quart de cercle des deux jauges 14e-14h qui lui sont adjacentes.

En outre, les secondes jauges sont fixées perpendiculairement auxdites génératrices et centrées sur ces dernières. En d'autre termes, chacune des génératrices croise une seconde jauge, perpendiculairement et en son centre.

On peut également voir sur les Figures 9 et 10 que la tête de vis 2 est une tête hexagonale, et que la direction principale de mesure de chacune desdites premières jauges 14a-14d forme un angle de 15 degrés par rapport à une génératrice reliant le sommet du trou conique 10 à un point d'intersection du cercle générateur du trou conique 10 avec un segment de droite reliant deux sommets opposés de l'hexagone définissant le contour de la face supérieure 2a de la tête de vis 2. En d'autres termes, la direction principale de mesure de l'une des premières jauges 14a-14d est tournée de 15 degrés par rapport à une droite passant par deux sommets opposés de l'hexagone formant la tête 2 de la vis 1, en prenant le sommet du trou conique 10 comme centre de rotation. Etant donné que chacune des premières jauges 14a-14d est à 90 degrés de ses deux jauges adjacentes, chacune des jauges 14a-14d est orientée à 15 degrés d'une droite passant par deux sommets opposés de l'hexagone formant la tête de vis 2.

De la même manière, les secondes jauges 14e-14h sont placées chacune dans une zone de même inertie que les autres. Les secondes jauges 14e-14h peuvent être disposées près des premières jauges 14a-14d, comme représenté sur la Figure 9, ou être d'un seul tenant avec celles-ci, comme représenté sur la Figure 10 où on utilise quatre rosettes à jauge double.

L'orientation à 15 degrés permet d'avoir une même inertie sur chaque jauge 14a-14h lors du serrage. En effet, le fait que la tête de vis 2 soit de forme hexagonale induit lors de son serrage des contraintes d'intensités différentes en fonction de l'emplacement de mesure.

En particulier, sur un axe reliant deux sommets opposés de l'hexagone formant la tête de vis 2, la quantité de matière à déplacer est plus importante, et par conséquent, le moment d'inertie à appliquer est plus important que sur une médiatrice de deux côtés opposés de la tête 2.

Ainsi, les contraintes mesurées par une jauge placée sur ledit axe seront plus faibles que celles mesurées par une jauge placée sur ladite médiatrice.

L'orientation à 15 degrés permet donc d'obtenir un moment d'inertie identique pour chacune des jauges 14a-14h.

Le dispositif 8 peut également comprendre un capteur de température 14t, qui permet de mesurer les variations de température de la tête de vis 2.

En effet, une variation de température entraîne une dilatation ou une contraction de la matière formant la tête de vis 2, ce qui allonge ou rétracte les jauges 12a-12h, et une variation de température entraîne une modification de l'élasticité du matériau formant la vis 1.

En outre, la sensibilité de la jauge dépend également de la température, tout comme la dérive thermique du zéro selon laquelle la résistance d'une jauge augmente avec la température, en l'absence de contrainte. Il est donc nécessaire de prendre en compte la température lors de la mesure.

La compensation de la valeur de résistance en fonction de la température peut se faire dans l'amplificateur 8e, dans le cas d'une mesure sans fil, ou dans les moyens de détermination, dans le cas d'une mesure filaire. Dans les deux cas, la compensation en température suit une règle établie empiriquement ou par apprentissage.

La compensation en soi est une technique bien connue pour corriger la dérive de zéro et de sensibilité des jauges.

Sur la Figure 10, on peut voir un agencement des jauges 14a-14h, ainsi que le câblage du pont de Wheatstone 13.

On peut également voir le câblage reliant les jauges 14a-14h, lesquelles jauges 14a-14h sont reliées en série deux à deux, de telle sorte que les valeurs de résistances de celles-ci s'additionnent, et forment des groupes de jauges reliés par un pont de Wheatstone 13.

Un tel dispositif 8 peut être mis oeuvre, par exemple, sur des vis de taille M4 selon la norme ISO 4017, à savoir une vis dont la distance entre deux côtés opposés de l'hexagone formant la tête est de 7 mm.

En reprenant le groupe d'équations (1), on a ainsi :

```
R1 = R(14a)+R(14b);     R2 = R(14e)+R(14f);


R3 = R(14c)+R(14d); et  R4 = R(14g)+R(14h).
```

Cas de la traction seule

Similairement aux jauges 12a-12d du premier mode de réalisation, lorsqu'une force de traction T est exercée sur la vis 1, les premières jauges 14a-14d s'allongent alors que les secondes jauges 14e-14h raccourcissent.

Ainsi, la valeur de résistance des premières jauges 14a-14d augmente d'une valeur D, et la valeur de résistance des secondes jauges 14e-14h diminue d'une valeur -E.

En remplaçant dans le groupe d'équations (1), on a donc : R1 = R3 = 2R + 2D, et R2 = R4 = 2R - 2E.

Puis en remplaçant dans l'équation (3), on a :

```
(3) = (2R+2D)² - (2R-2E)²

    = 4D²-4E²+8RD+8RE ≠ 0.
```

Même dans le cas où les premières jauges s'allongent autant que les secondes jauges raccourcissent, c'est-à-dire avec D=E, on a encore (3) = 16RD ≠ 0.

L'équation (3) n'est pas satisfaite, et une tension Vs non nulle est mesurée, et on peut ainsi en déduire la contrainte de traction.

Là encore, on obtient expérimentalement une droite d'étalonnage faisant correspondre la tension mesurée à la contrainte de traction dans la vis, que l'on fournit à l'utilisateur final avec la vis correspondante.

Cas d'un cisaillement seul

Lors de l'application d'une force de cisaillement seule sur la vis 1, la tête de vis 2 raccourcit dans la direction de cisaillement et s'allonge dans la direction orthogonale au cisaillement. Dans un tel cas, les premières jauges 14a-14d ne sont que faiblement déformées et les secondes jauges 14e-14h s'allongent ou se raccourcissent en fonction de la direction du cisaillement.

En particulier, lorsqu'un cisaillement orienté selon un axe passant par les jauges 14e et 14g est appliqué, ces dernières s'allongent et les jauges 14f et 14h raccourcissent. Ainsi, la valeur de résistance des premières jauges 14a-14d n'est pas modifiée, celles des jauges 14e et 14g augmente et celle jauges 14f et 14h diminue.

Plus précisément, comme les secondes jauges 14e-14h sont opposées deux à deux, la valeur de résistance des jauges 14e et 14g augmente d'une même valeur F et la valeur de résistance des secondes jauges 14f et 14h diminue d'une même valeur -G.

On a donc R2 = R4 = R+F + R-G = 2R+F-G ;

et R1 = R3 = 2R.

En remplaçant dans l'équation (3), on a :

$$(3) = (2R)^2 - (2R+F-G)^2$$

$$= -4RF+4RG+2FG-F^2-G^2$$

On peut considérer que le cisaillement est parfait ou presque parfait, c'est-à-dire que les jauges 14e et 14g s'allongent autant que les jauges 14f et 14h diminue, soit F=G.

Dans un tel cas, l'équation (3) est satisfaite, et aucune tension n'est mesurée.

Plus généralement, quelles que soient l'orientation et la force du cisaillement, l'équation (3) est satisfaite, et la vis 1 selon le premier mode de réalisation permet donc d'éviter la mesure parasite de la contrainte de cisaillement dans la tête de vis 2, comme expliqué ci-après.

Cas d'une traction et d'un cisaillement simultanés

Dans le cas de l'application d'une traction adjointe à un cisaillement, par exemple un cisaillement selon un axe passant par les jauges 14e et 14g est appliqué, on observe le comportement suivant des jauges :

- les jauges 14a-14d s'allongent d'une valeur D sous l'effet de la traction, le cisaillement ne produisant pas d'effet sur celles-ci,
- les jauges 14e et 14g raccourcissent d'une valeur E sous l'effet de la traction et s'allongent d'une valeur F sous l'effet du cisaillement d'une valeur F, et
- les jauges 14f et 14h raccourcissent d'une valeur E sous l'effet de la traction et raccourcissent encore d'une valeur G sous l'effet du cisaillement.

On a donc :

$$R1 = R3 = 2R+2D,$$

et

$$R2 = R4 = R-E+F + R-E-G = 2R-2E+F-G.$$

En reprenant l'équation (3), on obtient :

$$(3) = (2R+2D)^2 - (2R-2E+F-G)^2$$

$$= 4R^2+8RD+4D^2 - 4R^2+8RE-4RFC+4RG+4EF-4EG+2FG-4E^2-$$

$F^2-G^2$

Comme précédemment, si l'on considère le cisaillement comme parfait ou quasi-parfait, c'est-à-dire que les jauges 14e et 14g s'allongent autant que les jauges 14f et 14h diminue, alors F=G.

On a alors (3) = 8RD+4D$^2$+8RE-4E$^2 \neq$ 0. On constate que les déformations des jauges sous l'effet du cisaillement n'interviennent pas.

Même dans le cas où les premières jauges s'allongent autant que les secondes jauges raccourcissent, c'est-à-dire avec D=E, on a encore (3) = 16RD $\neq$ 0.

On ne mesure donc bien que la traction à l'aide de la vis 1 selon le deuxième mode de réalisation de la présente invention, la valeur 16RD mesurée étant identique au cas de la traction seule.

## Troisième mode de réalisation

Si l'on se réfère maintenant aux Figures 11 et 12, on peut y voir un troisième mode de réalisation de la présente invention dans lequel la tête de vis 2 comprend des jauges d'extensométrie dites pour cisaillement, en particulier quatre jauges 15a-15d fixées dans le trou conique 10.

La vis 1 est serrée à l'aide d'un écrou 16 entre une première plaque 4 ayant un trou traversant 5 et une seconde plaque 17 ayant un trou traversant 18.

Chacune des jauges 15a-15d a une direction principale de mesure, représentée par l'orientation du segment schématisé formant chacune des jauges 15a-15d sur les Figures 11 à 13.

Les première et deuxième jauges 15a, 15b sont disposées pour que leurs directions principales de mesure soient à 45° de part et d'autre d'une première génératrice du trou conique 10, et les troisième et quatrième jauges 15c, 15d sont disposées de la même manière à 45° de part et d'autre d'une autre génératrice diamétralement opposée à ladite première génératrice du trou conique 10.

Les quatre jauges 15a-15d sont reliées électriquement selon le pont de Wheatstone 13.

En reprenant le groupe d'équations (1), on a ainsi :

```
(4)  R1 = R(15a) ; R2 = R(15c) ;

     R3 = R(15b) ; et R4 = R(15d).
```

### Cas de la traction seule

Lorsqu'une force de traction T est exercée sur la vis 1, en particulier pendant son serrage, la tête de vis 2 se déforme d'une manière telle que sa surface supérieure 2a devient concave. Dans un tel cas, les jauges 15a-15d s'allongent toutes, et de la même valeur.

Ainsi, la valeur de résistance des premières jauges 15a-15d augmente d'une valeur donnée H de telle sorte que R1 = R2 = R3 = R4 = R+H.

En remplaçant dans l'équation (3), on a :

```
(3)  (R+H)² - (R+H)² = 0.
```

L'équation (3) est satisfaite, et une tension Vs nulle est mesurée. La vis selon le troisième mode de réalisation de la présente invention ne permet donc pas de mesurer une contrainte de traction seule.

### Cas d'un cisaillement seul

Si l'on se réfère à la Figure 13, on peut voir que lors de l'application d'une force de cisaillement seule sur la vis 1, les jauges 15a-15d s'allongent ou se raccourcissent en fonction de la direction du cisaillement.

En particulier, lors d'un cisaillement provoqué par le déplacement de la plaque 17 selon une direction 19, les jauges 15a et 15b s'allongent et les jauges 15c et 15d raccourcissent.

Ainsi, la valeur de résistance des jauges 15a et 15b augmente d'une même valeur I et la valeur de résistance des secondes jauges 15c et 15d diminue d'une même valeur J.

On a donc R1 = R3 = R+I et R2 = R4 = R-J.

En remplaçant dans l'équation (3), on a :

```
(3)  = (R+I)² - (R-J)²

     = I²-J²+2RI+2RJ
```

Même dans le cas où on considère le cisaillement comme parfait, c'est-à-dire que les jauges 15a et 15b s'allongent autant que les jauges 15c et 15d raccourcissent, c'est-à-dire avec I=J, et en remplaçant J par I dans (3), on a encore (3) = 4RI ≠ 0.

Si on considère maintenant un cisaillement provoqué par le déplacement de la plaque 17 selon une direction 20, les jauges 15a et 15c s'allongent et les jauges 15b et 15d raccourcissent.

Ainsi, la valeur de résistance des jauges 15a et 15c augmente d'une même valeur I et la valeur de résistance des secondes jauges 15b et 15d diminue d'une même valeur J.

On a donc R1 = R2 = R+I et R3 = R4 = R-J.

En remplaçant dans l'équation (3), on a :

$$(3) \quad = \quad (R+I).(R-J) \; - \; (R+I).(R-J)$$
$$= \; 0$$

Dans un tel cas l'équation (3) est satisfaite, une tension de sortie Vs nulle est mesurée, et le cisaillement n'est pas mesuré.

La vis 1 selon le troisième mode de réalisation permet donc de mesurer un cisaillement en connaissant au préalable sa direction afin de mesurer les contraintes qu'il exerce dans la tête de vis 2.

Dans le cas d'une traction et d'un cisaillement simultanés, en appliquant le même raisonnement que pour le deuxième mode de réalisation, on comprend que seul le cisaillement sera mesuré.

Là encore, on pourra établir une courbe d'étalonnage pour chaque type de vis.

Selon un mode de réalisation particulier, la vis 1 peut comprendre à la fois des jauges pour traction 12a-12d ou 14a-14h, et des jauges pour cisaillement 15a-15d, reliées chacune par un pont de Wheatstone 13 tel que décrit précédemment.

Ainsi, une telle vis 1 permet de mesurer à la fois les contraintes de traction et d'un cisaillement dont la direction est connue, dans la tête de vis 2.

Il est bien entendu que les modes de réalisation ci-dessus de la présente invention ont été donnés à titre indicatif et non limitatif et que des modifications pourront y être apportées sans que l'on s'écarte pour autant du cadre de la présente invention.

## Revendications

1. Vis (1) ayant une tête de vis (2) et un corps cylindrique fileté (3), la tête de vis (2) étant munie de jauges d'extensométrie (12a-12d ; 14a-14h ; 15a-15d) disposées de façon à se déformer avec la déformation de la tête de vis (2), afin de mesurer une contrainte interne à la vis (1), lesdites jauges (12a-12d ; 14a-14h ; 15a-15d) étant à cet effet reliées ou aptes à être reliées à une alimentation électrique et à des moyens de détermination pour déterminer la valeur d'au moins une contrainte interne à la vis à partir des déformations desdites jauges (12a-12d ; 14a-14h ; 15a-15d), **caractérisée par le fait que** la tête de vis (2) présente, sur sa face supérieure (2a), un trou conique (10) dont l'axe de révolution est aligné avec l'axe de révolution du corps cylindrique (3) de la vis (1), et que lesdites jauges (12a-12d ; 14a-14h ; 15a-15d) sont disposées sur la paroi du trou conique (10) de façon à se déformer avec la déformation du trou conique (10), lesdites jauges (12a-12d ; 14a-14h ; 15a-15d) étant orientées de façon à mesurer au moins un type de contrainte interne à la vis (1) choisi parmi la traction et le cisaillement afin de connaître les efforts présents dans le corps cylindrique (3) .

2. Vis (1) selon la revendication 1, **caractérisée par le fait que** la tête de vis est munie de quatre premières jauges d'extensométrie (14a-14d), dites pour traction, et de quatre secondes jauges d'extensométrie (14e-14h), également dites pour traction, lesdites premières jauges (14a-14d) sont disposées chacune avec leur direction principale de mesure alignée avec une génératrice dudit trou conique (10) et sont réparties selon un angle uniforme entre elles, et lesdites secondes jauges (14e-14h) sont disposées chacune avec leur direction principale de mesure sur un cercle formé à l'intersection de la paroi dudit trou conique (10) et d'un plan imaginaire parallèle à la face supérieure (2a) de la tête de vis (2), et sont réparties à équidistance les unes des autres sur la circonférence dudit cercle, lesdites premières jauges (14a-14d) formant deux groupes de jauges comprenant chacun deux premières jauges (14a-14d) adjacentes reliées électriquement en série et lesdites secondes jauges (14e-14h) formant deux autres groupes de jauges comprenant chacun deux secondes jauges (12e-12h) adjacentes reliées électriquement en série, les quatre groupes de jauges étant reliés par un pont de Wheatstone (13) relié ou apte à être relié à l'alimentation électrique et aux moyens de détermination, lesdites premières et secondes jauges (14a-14h) permettant la mesure de la contrainte interne de traction dans la tête de vis (2) afin de connaître les efforts présents dans le corps cylindrique (3).

**3.** Vis (1) selon la revendication 2, **caractérisée par le fait que** la tête de vis (2) est une tête hexagonale et la direction principale de mesure de chacune desdites premières jauges (14a-14d) forme un angle compris entre 30 et 10 degrés, de préférence de 15 degrés, par rapport à une génératrice reliant le sommet du trou conique (10) à un point d'intersection du cercle générateur du trou conique (10) avec un segment de droite reliant deux sommets opposés de l'hexagone définissant le contour de la face supérieure (2a) de la tête de vis (2).

**4.** Vis (1) selon l'une des revendications 2 et 3, **caractérisée par le fait que** chaque seconde jauge (14e-14h) est centrée sur la direction principale de mesure de l'une, correspondante, desdites premières jauges (14a-14d).

**5.** Vis (1) selon la revendication 4, **caractérisée par le fait que** chaque seconde jauge (14e-14h) est d'un seul tenant avec la première jauge correspondante (14a-14d), sous la forme d'une rosette à jauge double.

**6.** Vis (1) selon l'une des revendications 1 à 5, **caractérisée par le fait que** la tête de vis (2) est munie de quatre jauges d'extensométrie (15a-15d), dites pour cisaillement, les première (15a) et troisième jauges (15c) étant disposées chacune parallèlement à deux génératrices situées à 45° de part et d'autre d'une génératrice principale du trou conique (10), les deux autres jauges (15b, 15d) étant disposées chacune parallèlement à deux génératrices situées à 45° de part et d'autre d'une autre génératrice principale du trou conique (10) diamétralement opposée à ladite génératrice principale du trou conique (10), les quatre jauges (15a-15d) étant reliées par un pont de Wheatstone (18) relié ou apte à être relié à l'alimentation électrique et aux moyens de détermination, lesdites jauges (15a-15d) permettant la mesure de la contrainte interne de cisaillement dans la tête de vis (2) afin de connaître les efforts présents dans le corps cylindrique (3).

**7.** Vis (1) selon la revendication 1, **caractérisée par le fait que** la tête de vis est munie de quatre jauges d'extensométrie (12a-12d), dites pour traction, deux jauges (12a, 12c) sont disposées chacune avec leur direction principale de mesure alignée avec une génératrice dudit trou conique (10), les deux génératrices étant diamétralement opposées, et les deux autres jauges (12b, 12d) sont disposées chacune avec leur direction principale de mesure sur un cercle formé à l'intersection de la paroi dudit trou conique (10) et d'un plan imaginaire parallèle à la face supérieure (2a) de la tête de vis (2), et sont réparties à équidistance les unes des autres sur la circonférence dudit cercle, en étant de préférence chacune centrée sur l'une respective desdites deux génératrices, les quatre jauges (12a-12d) étant reliées par un pont de Wheatstone (13) relié ou apte à être relié à l'alimentation électrique et aux moyens de détermination, lesdites jauges (12a-12d) permettant la mesure de la contrainte interne de traction lorsqu'un cisaillement n'est pas appliqué dans la tête de vis (2).

**8.** Vis (1) selon l'une des revendications 1 à 7, **caractérisée par le fait que** le trou conique (10) a une hauteur inférieure ou égale à celle de la tête de vis (2).

**9.** Vis (1) selon l'une des revendications 1 à 8, **caractérisée par le fait que** l'angle du sommet du cône est compris entre 70 et 150 degrés, de préférence entre 75 et 120 degrés, et, de la façon que l'on préfère le plus, est de 90 degrés.

**10.** Vis (1) selon l'une des revendications 1 à 9, **caractérisée par le fait qu'**une gorge (11) est formée sur la surface inférieure de la tête de la vis (2) et de manière concentrique et adjacente au corps cylindrique fileté (3).

**11.** Vis (1) selon l'une des revendications 1 à 10, **caractérisée par le fait que** les jauges d'extensométrie (12a-12d ; 14a-14h ; 15a-15d) sont reliées ou aptes à être reliées à l'alimentation électrique et aux moyens de détermination de manière sans fil, les jauges (12a-12d ; 14a-14h ; 15a-15d) étant reliées à un premier émetteur/récepteur sans fil de type communication en champ proche (NFC), et l'alimentation électrique et les moyens de détermination étant reliés à un second émetteur/récepteur sans fil de type NFC, les premier et second émetteurs/récepteurs étant aptes à transférer entre eux de l'énergie et des informations de manière sans fil.

**Patentansprüche**

**1.** Schraube (1) mit einem Schraubenkopf (2) und einem gewindeten zylindrischen Körper (3), wobei der Schraubenkopf (2) mit extensometrischen Dehnungsmessern (12a-12d; 14a-14h; 15a-15d) ausgestattet ist, die derart angeordnet sind, dass sie sich mit der Verformung des Schraubenkopfs (2) verformen, um eine interne Beanspruchung der Schraube (1) zu messen, wobei die Dehnungsmesser (12a-12d; 14a-14h; 15a-15d) zu diesem Zweck mit einer elektrischen Versorgung und mit Bestimmungsmitteln verbunden sind oder imstande sind, verbunden zu sein, um den Wert von mindestens einer internen Beanspruchung der Schraube ausgehend von den Verformungen der Dehnungsmesser (12a-12d; 14a-14h; 15a-15d) zu bestimmen, **dadurch gekennzeichnet, dass** der Schraubenkopf (2) auf seiner oberen Fläche (2a) ein konisches Loch (10) aufweist, dessen Drehachse mit der Drehachse des zylindrischen Körpers (3) der Schraube (1) fluchtet, und dass die Dehnungsmesser (12a-12d; 14a-14h; 15a-15d) auf der Wand des konischen Lochs (10) derart angeordnet sind, dass sie sich mit der Verformung des konischen Lochs (10) verformen, wobei die Dehnungsmesser (12a-12d; 14a-14h; 15a-15d) derart ausgerichtet sind, dass sie mindestens einen Typ einer internen Beanspruchung der Schraube (1) messen, der aus der Zugbeanspruchung und der Scherbeanspruchung ausgewählt ist, um die in dem zylindrischen Körper (3) vorhandenen Kräfte zu kennen.

2. Schraube (1) nach Anspruch 1, **dadurch gekennzeichnet, dass** der Schraubenkopf mit vier ersten extensometrischen Zugbeanspruchungs-Dehnungsmessern (14a-14d) und vier zweiten ebenfalls extensometrischen Zugbeanspruchungs-Dehnungsmessern (14e-14h) ausgestattet ist, wobei die ersten Dehnungsmesser (14a-14d) jeweils mit ihrer Hauptmessrichtung mit einer Mantellinie des konischen Lochs (10) fluchtend angeordnet sind und gemäß einem gleichmäßigen Winkel untereinander verteilt sind, und die zweiten Dehnungsmesser (14e-14h) jeweils mit ihrer Hauptmessrichtung auf einem Kreis angeordnet sind, der am Schnittpunkt der Wand des konischen Lochs (10) und einer imaginären Ebene, die parallel zu der oberen Fläche (2a) des Schraubenkopfs (2) ist, gebildet ist, und gleichbeabstandet voneinander auf dem Umfang des Kreises verteilt sind, wobei die ersten Dehnungsmesser (14a-14d) zwei Dehnungsmessergruppen bilden, umfassend jeweils zwei benachbarte erste Dehnungsmesser (14a-14d), die elektrisch in Reihe verbunden sind, und wobei die zweiten Dehnungsmesser (14e-14h), die zwei andere Dehnungsmessergruppen bilden, jeweils zwei benachbarte zweite Dehnungsmesser (12e-12h) umfassen, die elektrisch in Reihe verbunden sind, wobei die vier Dehnungsmessergruppen durch eine Wheatstonesche Messbrücke (13) verbunden sind, die mit der elektrischen Versorgung und mit den Bestimmungsmitteln verbunden ist oder imstande ist, verbunden zu sein, wobei die ersten und zweiten Dehnungsmesser (14a-14h) das Messen der internen Zugbeanspruchung im Schraubenkopf (2) erlauben, um die in dem zylindrischen Körper (3) vorhandenen Kräfte zu kennen.

3. Schraube (1) nach Anspruch 2, **dadurch gekennzeichnet, dass** der Schraubenkopf (2) ein Sechskantkopf ist und die Hauptmessrichtung jeder der ersten Dehnungsmesser (14a-14d) einen Winkel bildet, der zwischen 30 und 10 Grad, vorzugsweise bei 15 Grad, in Bezug auf eine Mantellinie liegt, welche die Spitze des konischen Lochs (10) an einem Schnittpunkt des Kreises, der das konische Loch (10) bildet, mit einem Segment einer Geraden, welche zwei gegenüberliegende Spitzen des Sechsecks verbindet, welches die Kontur der oberen Fläche (2a) des Schraubenkopfs (2) definiert.

4. Schraube (1) nach einem der Ansprüche 2 und 3, **dadurch gekennzeichnet, dass** jeder zweite Dehnungsmesser (14e-14h) auf der Hauptmessrichtung von einem entsprechenden der ersten Dehnungsmesser (14a-14d) zentriert ist.

5. Schraube (1) nach Anspruch 4, **dadurch gekennzeichnet, dass** jeder zweite Dehnungsmesser (14e-14h) zusammenhängend mit dem entsprechenden ersten Dehnungsmesser (14a-14d) in Form einer doppelten Dehnungsmesserrosette ist.

6. Schraube (1) nach einem der Ansprüche 1 bis 5, **dadurch gekennzeichnet, dass** der Schraubenkopf (2) mit vier extensometrischen Scherbeanspruchungs-Dehnungsmessern (15a-15d) ausgestattet ist, wobei der erste (15a) und dritte Dehnungsmesser (15c) jeweils parallel zu zwei Mantellinien angeordnet ist, die sich bei 45° beiderseits einer Hauptmantellinie des konischen Lochs (10) befinden, wobei die zwei anderen Dehnungsmesser (15b, 15d) jeweils parallel zu zwei Mantellinien angeordnet sind, die sich bei 45° beiderseits einer anderen Hauptmantellinie des konischen Lochs (10) diametral gegenüberliegend zu der anderen Hauptmantellinie des konischen Lochs (10) befinden, wobei die vier Dehnungsmesser (15a-15d) durch eine Wheatstonesche Messbrücke (18) verbunden sind, die mit der elektrischen Versorgung und mit den Bestimmungsmitteln verbunden ist oder imstande ist, verbunden zu sein, wobei die Dehnungsmesser (15a-15d) das Messen der internen Scherbeanspruchung im Schraubenkopf (2) erlauben, um die in dem zylindrischen Körper (3) vorhandenen Kräfte zu kennen.

7. Schraube (1) nach Anspruch 1, **dadurch gekennzeichnet, dass** der Schraubenkopf mit vier extensometrischen Zugbeanspruchungs-Dehnungsmessern (12a-12d) ausgestattet ist, wobei zwei Dehnungsmesser (12a, 12c) jeweils mit ihrer Hauptmessrichtung mit einer Mantellinie des konischen Lochs (10) fluchtend angeordnet sind, wobei die zwei Mantellinien diametral gegenüberliegend sind, und die zwei anderen Dehnungsmesser (12b, 12d) jeweils mit ihrer Hauptmessrichtung auf einem Kreis angeordnet sind, der am Schnittpunkt der Wand des konischen Lochs (10) und einer imaginären Ebene, die parallel zu der oberen Fläche (2a) des Schraubenkopfs (2) ist, gebildet ist, und gleichbeabstandet voneinander auf dem Umfang des Kreises verteilt sind, wobei sie dabei vorzugsweise jeweils auf einer jeweiligen der zwei Mantellinien zentriert sind, wobei die vier Dehnungsmesser (12a-12d) durch eine Wheatstonesche Messbrücke (13) verbunden sind, die mit der elektrischen Versorgung und mit den Bestimmungsmitteln verbunden ist oder imstande ist, verbunden zu sein, wobei die Dehnungsmesser (12a-12d) das Messen der internen Zugbeanspruchung erlauben, wenn keine Scherbeanspruchung in dem Schraubenkopf (2) anliegt.

8. Schraube (1) nach einem der Ansprüche 1 bis 7, **dadurch gekennzeichnet, dass** das konische Loch (10) eine Höhe hat, die kleiner als oder gleich wie die des Schraubenkopfs (2) ist.

9. Schraube (1) nach einem der Ansprüche 1 bis 8, **dadurch gekennzeichnet, dass** der Winkel der Spitze des Konus zwischen 70 und 150 Grad, vorzugsweise zwischen 75 und 120 Grad, liegt und in der am meisten bevorzugten Art 90 Grad beträgt.

10. Schraube (1) nach einem der Ansprüche 1 bis 9, **dadurch gekennzeichnet, dass** eine Nut (11) auf der unteren Oberfläche des Schraubenkopfs (2) ausgebildet und konzentrisch und benachbart zum gewindeten zylindrischen Körper (3) ist.

11. Schraube (1) nach einem der Ansprüche 1 bis 10, **dadurch gekennzeichnet, dass** die extensometrischen Dehnungsmessern (12a-12d; 14a-14h; 15a-15d) mit der elektrischen Versorgung und den Bestimmungsmitteln drahtlos verbunden sind oder imstande sind, verbunden zu sein, wobei die Dehnungsmesser (12a-12d; 14a-14h; 15a-15d) mit einem ersten drahtlosen Sender/Empfänger vom Typ Nahfeldkommunikation (NFC) verbunden sind, und die elektrische Versorgung und die Bestimmungsmittel mit einem zweiten drahtlosen Sender/Empfänger vom Typ NFC verbunden sind, wobei der erste und zweite Sender/Empfänger imstande sind, zwischen sich Energie und Informationen drahtlos zu übertragen.

**Claims**

1. A screw (1) having a screw head (2) and a threaded cylindrical body (3), the screw head (2) being provided with strain gauges (12a-12d ; 14a-14h ; 15a-15d) arranged so as to be deformed together with the deformation of the screw head (2), in order to measure a stress within the screw (1), said gauges (12a-12d ; 14a-14h ; 15a-15d) being for this purpose connected or able to be connected to a power supply and to determination means for determining the value of at least one stress within the screw from the deformations of said gauges (12a-12d ; 14a-14h ; 15a-15d), **characterised in that** the screw head (2) has, on the upper face (2a) thereof, a conical hole (10) having a revolution axis that is aligned with the revolution axis of the cylindrical body (3) of the screw (1), and **in that** said gauges (12a-12d ; 14a-14h ; 15a-15d) are arranged on the wall of the conical hole (10) so as to be deformed together with the deformation of the conical hole (10), said gauges (12a-12d ; 14a-14h ; 15a-15d) being oriented so as to measure at least one type of stress within the screw (1) selected among the tension and the shearing, in order to determine the stresses within the cylindrical body (3).

2. The screw (1) according to claim 1, **characterised in that** the screw head is provided with four first strain gauges (14a-14d), so-called gauges for tension, and four second strain gauges (14e-14h), also so-called for tension, wherein said first gauges (14a-14d) are each arranged with the main measurement direction thereof being aligned with a generatrix of said conical hole (10) and are distributed with an uniform angle between each other, and said second gauges (14e-14h) are each arranged with the main measurement direction thereof being on a circle formed at the intersection of the wall of said conical hole (10) and an imaginary plane parallel to the upper face (2a) of the screw head (2), and are distributed at equidistance from each other on the circumference of said circle, said first gauges (14a-14d) forming two groups of gauges each comprising two first gauges (14a-14d) that are adjacent and electrically connected in series and said second gauges (14e-14h) forming two other groups of gauges each comprising two second gauges (12e-12h) that are adjacent and electrically connected in series, the four groups of gauges being connected by a Wheatstone bridge (13) connected or able to be connected to the power supply and to the determination means, said first and second gauges (14a-14h) allowing to measure the inner tensile stress in the screw head (2) in order to know the stresses within the cylindrical body (3).

3. The screw (1) according to claim 2, **characterised in that** the screw head (2) is a hexagonal head and the main measurement direction of each of said first gauges (14a-14d) forms an angle between 30 and 10 degrees, preferably 15 degrees, with respect to a generatrix joining the apex of the conical hole (10) to a point of intersection of the generating circle of the conical hole (10) with a line segment joining two opposite apexes of the hexagon defining the outline of the upper face (2a) of the screw head (2).

4. The screw (1) according to one of claim 2 and 3, **characterised in that** each second gauge (14e-14h) is centered on the main measurement direction of a corresponding one of said first gauges (14a-14d).

5. The screw (1) according to claim 4, **characterised in that** each second gauge (14e-14h) is integral with the corresponding first gauge (14a-14d), in the form of a double-gauge rosette.

6. The screw (1) according to one of claims 1-5, **characterised in that** the screw head (2) is provided with four strain gauges (15a-15d), so-called gauges for shearing, the first (15a) and third (15c) gauges each being arranged parallel to two generatrixes located at 45° on either side of a main generatrix of the conical hole (10), the two other gauges (15b, 15d) each being arranged parallel to two generatrixes located at 45° on either side of another main generatrix of the conical hole (10) that is diametrically opposed to said main generatrix of the conical hole (10), the four gauges (15a-15d) being connected by a Wheatstone bridge (18) connected or able to be connected to the power supply and to the determination means, said gauges (15a-15d) allowing to measure the inner shearing stress in the screw head (2) in order to know the stresses within the cylindrical body (3).

7. The screw (1) according to claim 1, **characterised in that** the screw head is provided with four strain gauges (12a-12d), so-called gauges for tension, wherein two gauges (12a, 12c) are each arranged with the main measurement direction thereof being aligned with a generatrix of said conical hole (10), the two generatrixes being diametrically opposed, and the two other gauges (12b, 12d) are each arranged with the main measurement direction thereof being on a circle formed at the intersection of the wall of said conical hole (10) and an imaginary plane parallel to the upper face (2a) of the screw head (2), and are distributed at equidistance from each other on the circumference of said circle, each one being preferably centered on a respective one of said two generatrixes, the four gauges (12a-12d) being connected by a Wheatstone bridge (13) connected or able to be connected to the power supply and to the determination means, said gauges (12a-12d) allowing to measure the inner tensile stress when shearing is not applied in the screw head (2).

8. The screw (1) according to one of claims 1-7, **characterised in that** the conical hole (10) has a height lower than or equal to that of the screw head (2).

9. The screw (1) according to one of claims 1-8, **characterised in that** the angle at the apex of the cone is between 70 and 150 degrees, preferably between 75 and 120 degrees, and most preferably is of 90 degrees.

10. The screw (1) according to one of claims 1-9, **characterised in that** a groove (11) is formed on the lower surface of the head of the screw (2) and in a concentric and adjacent manner with respect to the threaded cylindrical body (3).

11. The screw (1) according to one of claims 1-10, **characterised in that** the strain gauges (12a-12d ; 14a-14h ; 15a-15d) are connected or able to be connected to the power supply and to the determination means in a wireless manner, the gauges (12a-12d ; 14a-14h ; 15a-15d) being connected to a first near field communication (NFC) type wireless transceiver, and the power supply and the determination means being connected to a second NFC type wireless transceiver, the first and second transceivers being able to wirelessly transmit power and information therebetween.

**Fig. 1**
(Etat antérieur de la technique)

**Fig. 2**
(Etat antérieur de la technique)

**Fig. 3a**

**Fig. 3b**

**Fig. 4**

**Fig. 5**

## Fig. 6

## Fig. 7

Courbe d'étalonnage de la vis de la Figure 7

## Fig. 8

**Fig. 9**

**Fig. 10**

**Fig. 11**

**Fig. 12**

**Fig. 13**

**EP 3 320 219 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- TW 1310810

- US 2014251027 A